# EUROPÄISCHE PATENTSCHRIFT

(11) **EP 1 254 305 B1**
(45) Veröffentlichungstag und Bekanntmachung des Hinweises auf die Patenterteilung: **06.07.2005**
(21) Anmeldenummer: 01900468.8
(22) Anmeldetag: 18.01.2001
(51) Int. Cl.: F01N 3/20

(54) **VERFAHREN UND VORRICHTUNG ZUR REGELUNG EINES IN EINEM ABGASKANAL EINER VERBRENNUNGSKRAFTMASCHINE ANGEORDNETEN NO X?-SPEICHERKATALYSATORS**
METHOD AND DEVICE FOR CONTROLLING A NO X? STORAGE CATALYST THAT IS ARRANGED IN AN EXHAUST GAS CHANNEL OF A COMBUSTION ENGINE
PROCEDE ET DISPOSITIF POUR REGULER LE FONCTIONNEMENT D'UN CATALYSEUR ACCUMULATEUR DE NO X? PLACE DANS LE CANAL D'ECHAPPEMENT DES GAZ D'UN MOTEUR A COMBUSTION INTERNE

(30) Priorität: 26.01.2000 DE 10003219
(43) Veröffentlichungstag der Anmeldung: 06.11.2002
(73) Patentinhaber: Volkswagen Aktiengesellschaft, 38436 Wolfsburg (DE)
(72) Erfinder: HAHN, Hermann, 30175 Hannover (DE); HINZE, Sören, 38102 Braunschweig (DE)
(74) Vertreter: Reinstädler, Diane, Dr.
(86) Internationale Anmeldenummer: PCT/EP2001/000538
(87) Internationale Veröffentlichungsnummer: WO 2001/055564

(56) Entgegenhaltungen:
- EP-A- 0 598 917
- EP-A- 0 916 941
- WO-A-00/08316
- WO-A-00/76636
- DE-A- 19 739 848
- DE-A- 19 808 382

## Beschreibung

Die Erfindung betnfft ein Verfahren sowie eine Vorrichtung zur Regelung eines in einem Abgaskanal einer Verbrennungskraftmaschine angeordneten NOₓ-Speicherkatalysators mittels einer stromab des NOₓ-Speicherkatalysators angeordneten NOₓ-empfindlichen Meßeinrichtung, insbesondere eines NOₓ-Sensors.

Zur Durchführung einer Abgasnachbehandlung von mindestens zeitweise magerlaufenden Verbrennungskraftmaschinen ist bekannt, NOₓ-Speicherkatalysatoren in einem Abgaskanal der Verbrennungskraftmaschine anzuordnen. Diese lagern in mageren Betriebsphasen der Verbrennungskraftmaschine Stickoxide des Abgases ein.' In periodischen Abständen wird der NOₓ-Speicherkatalysator einer NOₓ-Regeneration unterzogen, um eine ursprüngliche NOₓ-Speicherkapazität wiederherzustellen, wofür der Katalysator mit einer fetten Abgasatmosphäre beaufschlagt wird. Dabei wird desorbiertes NOₓ mit den reduzierenden Abgaskomponenten Kohlenmonoxid CO und unverbrannten Kohlenwasserstoffen HC zu Stickstoff N₂ reduziert. Darüber hinaus ist es notwendig, in verhältnismäßig großen Intervallen Entschwefelungen des NOₓ-Speicherkatalysators durchzuführen, um diesen von unerwünschten Sulfateinlagerungen zu befreien. Üblicherweise werden Entschwefelungen ebenfalls durch Beaufschlagung des Katalysators mit einem fetten Abgas durchgeführt, wobei gleichzeitig Katalysatortemperaturen von über 600 °C eingestellt werden.

Es ist ferner bekannt, die Regelung von NOₓ-Speicherkatalysatoren, insbesondere ihrer NOₓ-Regenerations- und Entschwefelungszyklen, mittels stromab des NOₓ-Speicherkatalysators angeordneten NOₓ-Sensoren durchzuführen. Durch Erfassung einer hinter dem Katalysator vorliegenden NOₓ-Konzentration kann somit ein NOₓ-Durchbruch detektiert und eine NOₓ-Regeneration eingeleitet werden.

Die EP 0 916 941 A beschreibt ein Verfahren zur Detektion einer NOₓ-Speicheraktivität eines NOₓ-Speicherkatalysators mit Hilfe eines nachgeschalteten NOₓ-Sensors. Dabei wird nach Umschalten der Verbrennungskraftmaschine in einen mageren Betriebsmodus ein von einer NOₓ-Konzentration abhängiges Signal erfaßt und sein Verlauf analysiert, um einen Referenzzeitpunkt für die Überwachung der Speicheraktivität zu bestimmen. Als Kriterium zur Bestimmung des Bezugszeitpunktes wird ein absolutes Minimum des Signalverlaufs innerhalb einer vorgegeben Wartezeit nach Umschalten der Verbrennungskraftmaschine verwendet. Insbesondere wird die Signalhohe des NOₓ-Sensors zur Korrektur eines Offsets des Sensors verwendet. Aus der WO 00/76636 ist ein Verfahren zur Kalibrierung eines NOₓ-Sensors bekannt, wobei ebenfalls ein Minimum des Signalverlaufs nach Umschalten der Verbrennungskraftmaschine in einen mageren Betriebsmodus für eine Offsetkorrektur herangezogen wird.

Eine noch exaktere Steuerung des NOₓ-Speicherkatalysators laßt sich erreichen, wenn die NOₓ-Regenerations- und Entschwefelungsintervalle nicht auf eine aktuelle NOₓ-Konzentration hinter dem NOₓ-Speicherkatalysator abgestimmt werden, sondern auf eine gesamte während einer Magerphase der Verbrennungskraftmaschine den NOₓ-Speicherkatalysator passierte NOₓ-Menge, die durch Integration der gemessenen NOₓ-Konzentration bestimmt werden kann. Nachteilig an diesem Konzept ist, daß der Zeitpunkt, an dem nach einer Regenerationsphase die NOₓ-Einspeicherung tatsächlich erneut beginnt, unbekannt ist. Üblicherweise wird der Zeitpunkt des Umschaltens der Verbrennungskraftmaschine in den Magermodus für den Beginn der NOₓ-Einlagerungsphase zugrundegelegt. Dieser Zeitpunkt entspricht jedoch nur einer groben Näherung des tatsächlichen Einlagerungsbeginns. So bleibt etwa eine zeitliche Verzögerung unberücksichtigt, die auf eine von dem Abgas zurückzulegende Strecke zwischen der Verbrennungskraftmaschine und dem NOₓ-Speicherkatalysator zurückzuführen ist. Ferner besteht die Möglichkeit, daß sich der NOₓ-Speicherkatalysator zu Beginn der Magerphase in einem Temperaturbereich befindet, der keine zuverlässige Einspeicherung von Stickoxiden zuläßt. Als ein weiteres Problem kommt eine für heutige NOₓ-Sensoren typische Ansprechträgheit hinzu, die zu einer Verzögerung einer Signaländerung nach einer NOₓ-Konzentrationsänderung in der Umgebung des Sensors führen kann. Infolge dieser Umstände beginnt eine Integration eines durchgesetzten NOₓ-Massenstroms in der Regel zu früh, so daß eine Regeneration ebenfalls zu früh eingeleitet wird, was sich nachteilig auf den Kraftstoffverbrauch auswirkt. Das Problem der fehlenden Kenntnis von dem zeitlichen Zusammenhang zwischen einem Betriebspunkt der Verbrennungskraftmaschine und dem Katalysatorverhalten besteht für viele Regelungsprozesse des NOₓ-Speicherkatalysators.

Der Erfindung liegt daher die Aufgabe zugrunde, ein Verfahren und eine Vorrichtung zur Regelung eines gattungsgemäßen NOₓ-Speicherkatalysators vorzuschlagen, welches/weiche eine zeitliche Korrelation zwischen einem Betriebszustand der Verbrennungskraftmaschine und einer NOₓ-Sensormessung hinter dem NOₓ-Speicherkatalysator berücksichtigt.

Diese Aufgabe wird durch die Merkmale des Verfahrens nach Anspruch 1 sowie der Vorrichtung nach Anspruch 17 gelöst. Entsprechend dem erfindungsgemäßen Verfahren ist vorgesehen, eine Analyse eines nach einem Umschalten der Verbrennungskraftmaschine in einen mageren Betriebsmodus, beispielsweise nach einer Regeneration des NOₓ-Speicherkatalysators, vorliegenden Signalverlaufs der NOₓempfindlichen Meßeinrichtung hinsichtlich mindestens eines vorgegebenen Kriteriums durchzuführen. Dabei wird ein Zeitpunkt, an dem mindestens eines der vorgegebenen Kriterien erfüllt ist, als Bezugszeitpunkt für die Regelung von NOₓ-Regenerations- und/oder Entschwefelungsprozessen des NOₓ-Speicherkatalysators festgelegt. Erfindungsgemäß ist ferner vorgesehen, daß mindestens eines der vorgegebenen Kriterien ein Übergang eines fallenden Signalverlaufes in eine Steigung nahe Null oder eine positive Steigung des Signalverlaufs ist und/oder eine Unterschreitung eines vorgegebenen Schwellenwertes des Signals ist. Für die Steigung kann ein Schwellenwert vorgegeben werden. Das erstgenannte Kriterium entspricht im Wesentlichen dem Vorliegen eines Minimums im Signalverlauf der Meßeinrichtung, welches selbstverständlich auch mit einer anderen Methode zur Minimumbestimmung ermittelt werden kann, beispielsweise durch einen sukzessiven Vergleich der Größe der erfaßten Signalwerte. Die Kriterien sollten derart vorgegeben werden, daß unter Standardbedingungen von Katalysator und Meßeinrichtung stets ein Bezugszeitpunkt bestimmt werden kann, so daß die Regelung des NOₓ-Speicherkatalysators freigegeben werden kann.

Gemäß einer vorteilhaften Ausgestaltung wird unmittelbar mit einem Umschalten der Verbrennungskraftmaschine in einen mageren Betriebsmodus oder mit einer kurzen Verzögerung mit einer Analyse des Signalverlaufs der Meßeinrichtung zur Bestimmung des Bezugszeitpunktes begonnen. Zusätzlich kann der Start der Analyse des Signalverlaufs von einem Vorliegen des NOₓ-Speicherkatalysators in einem für eine NOₓ-Einspeicherung geeigneten Temperaturbereich abhängig gemacht werden Besonders vorteilhaft kann als zu erfüllendes Kriterium neben der Steigung nahe Null oder der positiven Steigung des Signalverlaufs ein gleichzeitiges Unterschreiten eines vorgegebenen Schwellenwertes für das Signal vorausgesetzt werden.

Es ist ferner bevorzugt vorgesehen, daß eines der vorgegebenen Kriterien ein ständiges Unterschreiten eines vorgegebenen Schwellenwertes für eine vorgegebene Mindestzeitspanne von Beginn der Analyse des Signalverlaufs ist. Durch dieses Kriterium werden auch Signalverläufe berücksichtigt, die nach einer Regeneration des NOₓ-Speicherkatalysators bereits zum Zeitpunkt des Umschaltens der Verbrennungskraftmaschine in einen mageren Betriebsmodus ein relativ konstantes und niedriges Niveau aufweisen, um dann langsam anzusteigen.

Ein weiteres Kriterium kann durch ein Unterschreiten eines vorgegebenen Schwellenwertes im Verlauf der Analyse vorgegeben werden. Optional kann auch dies über eine gewisse Mindestdauer gefordert werden.

Unabhängig von der Wahl der Kriterien kann es besonders bei einem niedrigen Signal-Rausch-Verhältnis vorteilhaft sein, den Signalverlauf vor seiner Analyse zu glätten. Dies kann beispielsweise durch Mittelung benachbarter Signalwerte oder anderer an sich bekannter Verfahren durchgeführt werden.

Eine weitere Ausgestaltung der Erfindung sieht vor, daß eine maximale Zeitspanne nach Beginn der Analyse des Signalverlaufes vorgegeben wird, nach deren erfolglosem Ablauf, ohne daß anhand der oben beschriebenen Kriterien ein Bezugszeitpunkt erfolgreich bestimmt werden konnte, der Zeitpunkt des Ablaufs der Zeitspanne als Bezugszeitpunkt verwendet wird. Gemäß einer alternativen Ausgestaltung wird nach einem erfolglosen Verstreichen der Zeitspanne eine erneute Regeneration des NOₓ-Speicherkatalysators mit einer anschließenden erneuten Bestimmung des Bezugszeitpunktes eingeleitet. Darüber hinaus kann es ferner vorteilhaft sein, die Information über eine erfolglos abgelaufene Bezugszeitpunktsuche für weitere Regelungsverfahren der Verbrennungskraftmaschine oder des NOₓ-Speicherkatalysators zu verwenden. Beispielsweise kann sie im Rahmen einer Diagnostik in eine Zustandsbeschreibung des Katalysators eingehen oder in eine Magerfreigabenregelung der Verbrennungskraftmaschine einfließen.

Es ist ferner bevorzugt vorgesehen, daß unmittelbar nach Bestimmung des Bezugszeitpunktes die Analyse des Signalverlaufs beendet und eine Auswertung des Signals der Meßeinrichtung zur Regelung des NOₓ-Speicherkatalysators freigegeben wird.

Gemäß einer bevorzugten Ausgestaltung wird der Bezugszeitpunkt als zeitlicher Nullpunkt für einen Beginn einer NOₓ-Einlagerung des NOₓ-Speicherkatalysators für die Regelung einer NOₓ-Regeneration und/oder einer Entschwefelung des NOₓ-Speicherkatalysators verwendet. Vorteilhafterweise beginnt etwa mit dem Bezugszeitpunkt eine Integration einer durch den NOₓ-Speicherkatalysator durchgesetzten NOₓ-Masse und/oder eine Berechnung einer in den NOₓ-Speicherkatalysator eingelagerten NOₓ-Menge.

Unter bestimmten Umständen kann vorgesehen sein, daß der Signalwert am Bezugszeitpunkt als ein Offset für eine Kalibrierung der Meßeinrichtung verwendet wird. Hierfür sind jedoch verhältnismäßig strenge Anforderungen an die Kriterien zur Bestimmung des Bezugszeitpunktes zu stellen. Insbesondere sollte zum Bezugszeitpunkt der Signalverlauf der Meßeinrichtung ein absolutes Minimum aufweisen.

Im Sinne einer sehr genauen und betriebsorientierten Regelung des NOₓ-Speicherkatalysators ist es äußerst zweckmäßig, die Bestimmung des Bezugszeitpunktes nach jeder NOₓ-Regeneration und jeder Entschwefelung des NOₓ-Speicherkatalysators durchzuführen.

Eine bevorzugte Ausgestaltung des Verfahrens sieht vor, daß der Bezugszeitpunkt zur Regelung des NOₓ-Speicherkatalysators bis zu einem erneuten Umschalten der Verbrennungskraftmaschine in einen mageren Betriebsmodus oder bis zu einem Vorliegen mageren Abgases an der Position der Meßeinrichtung gültig ist. In diesem Fall behält ein in einer Magerphase ermittelter Bezugszeitpunkt also so lange seine Gültigkeit, bis in einer folgenden Magerphase eine neue Suche nach einem Bezugszeitpunkt beginnt. Alternativ kann der Bezugszeitpunkt auch bis zu einem Umschalten der Verbrennungskraftmaschine in einen stöchiometrischen oder fetten Betriebsmodus beziehungsweise bis zu einem Vorliegen stöchiometrischen oder fetten Abgases an der Position der Meßeinrichtung gültig sein.

Ferner ist eine Vorrichtung vorgesehen, die Mittel umfaßt, mit welchen die Verfahrensschritte Durchführung einer Analyse eines nach einem Umschalten der Verbrennungskraftmaschine in einen mageren Betriebsmodus vorliegenden Signalverlaufs der NOₓ-empfindlichen Meßeinrichtung hinsichtlich mindestens eines vorgegebenen Kriteriums, wobei mindestens eines der vorgegebenen Kriterien ein Übergang eines fallenden Signalverlaufes in eine Steigung nahe Null oder eine positive Steigung des Signalverlaufs ist und/oder eine Unterschreitung eines vorgegebenen Schwellenwertes des Signals ist, und Festlegung eines Zeitpunktes, an dem mindestens eines der vorgegebenen Kriterien erfüllt ist, als Bezugszeitpunkt für die Regelung von NOₓ-Regenerations- und/oder Entschwefelungsprozessen des NOₓ-Speicherkatalysators ausführbar sind.

In einer bevorzugten Ausgestaltung umfassen diese Mittel eine Steuereinheit, in der eine Prozedur zur Steuerung der Verfahrensschritte zur Regelung eines NOₓ-Speicherkatalysators in digitaler Form hinterlegt ist. Diese Steuereinheit kann in ein Motorsteuergerät integriert sein.

Weitere vorteilhafte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Anordnung eines Abgasstranges einer Verbrennungskraftmaschine und
- Figur 2: einen Signalverlauf eines NOₓ-Sensors nach einer Regeneration eines NOₓ-Speicherkatalysators.

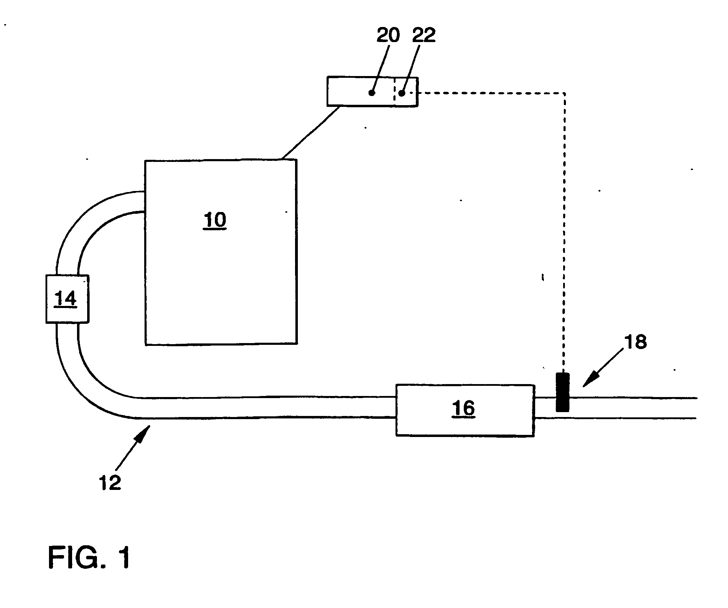

Die in Figur 1 schematisch dargestellte Anordnung einer Verbrennungskraftmaschine 10 weist einen Abgastrakt 12 mit einem hierin angeordneten optionalen Vorkatalysator 14 und einem NOₓ-Speicherkatalysator 16 auf. Stromab des NOₓ-Speicherkatalysators 16 ist außerdem ein NOₓ-Sensor 18 in dem Abgaskanal 12 angeordnet In Abhängigkeit einer hinter dem NOₓ-Speicherkatalysator 16 vorliegenden NOₓ-Konzentration beziehungsweise eines NOₓ-Anteits in einem Abgas gibt der NOₓ-Sensor 18 ein Meßsignal, in der Regel eine Spannung, an ein Motorsteuergerät 20 weiter, in welchem eine Steuereinheit 22 integriert ist. Die Steuereinheit 22 ermittelt anhand einer abgespeicherten Kennlinie des NOₓ-Sensors 18 die dem Sensorsignal entsprechende NOₓ-Konzentration. Abhängig von der ermittelten NOₓ-Konzentration steuert das Motorsteuergerät 20 die Verbrennungskraftmaschine 10, indem es beispielsweise Einfluß auf ein einzuspeisendes Luft-Kraftstoff-Gemisch nimmt. Insbesondere steuert das Motorsteuergerät 20 ein Umschalten der Verbrennungskraftmaschine 10 zwischen einem mageren (λ > 1) und einem stöchiometrischen oder fetten Betriebsmodus (λ ≤ 1), um eine NOₓ-Regeneration des NOₓ-Speicherkatalysators 16 zu steuern. Eine sehr genaue Regelung dieser Regenerationszyklen kann erreicht werden, wenn die Einleitung einer fetten Regenerationsphase nicht von einer aktuellen NOₓ-Konzentration hinter dem NOₓ-Speicherkatalysator 16 abhängig gemacht wird, sondern von einer während einer Magerphase insgesamt durch den NOₓ-Speicherkatalysator 16 durchgesetzten NOₓ-Menge. Diese kann durch Integration des Signals des NOₓ-Sensors 18 über die Dauer der Magerphase berechnet werden. Bislang war jedoch kein Verfahren bekannt, mit dem der Zeitpunkt der Einlagerung von Stickoxiden in den NOₓ-Speicherkatalysator 16 tatsächlich nach einem Umschalten der Verbrennungskraftmaschine 10 in den Magermodus beginnt und die Integration des Signals des NOₓ-Sensors 18 sinnvoll starten sollte.

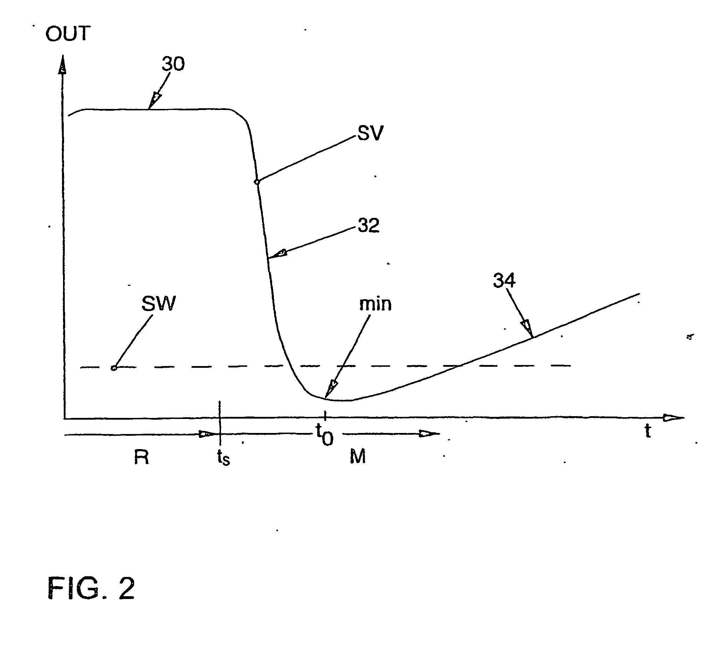

Figur 2 zeigt einen vereinfachten zeitlichen Verlauf eines Ausgabesignals OUT eines NOₓ-Sensors 18 während eines Wechsels von einem fetten Regenerationsmodus R in einen mageren Betriebsmodus M der Verbrennungskraftmaschine 10. Während der NOₓ-Regeneration R verharrt das Sensorsignal OUT auf einem relativ hohen Niveau (Bereich 30). Dies ist zum einen auf eine unvollständige Reduktion von desorbierten Stickoxiden NOₓ zurückzuführen und andererseits auf eine Entstehung von Ammoniak NH₃ während der Regeneration R, auf welches der NOₓ-Sensor 18 ebenfalls anspricht. Für eine kurze Dauer nach Umschalten der Verbrennungskraftmaschine 10 zu einem Zeitpunkt t_{S} in den Magermodus M bleibt das Sensorsignal OUT zunächst auf diesem hohen Niveau. Eine Ursache hierfür ist ein von einem Abgas zu durchströmendes Totvolumen zwischen der Verbrennungskraftmaschine 10 und einer Position des NOₓ-Sensors 18. Zudem weist der NOₓ-Speicherkatalysator 16 während des Umschaltens zum Zeitpunkt t_{S} häufig noch eine Temperatur auf, die zu hoch ist, um eine optimale NOₓ-Absorptionsaktivität zu gewährleisten. Schließlich kommt eine Trägheit des NOₓ-Sensors 18 hinzu, die dazu führt, daß der Sensor 18 noch ein hohes Signal ausgibt, während bereits mageres, NOₓ-armes Abgas an der Sensorposition vorliegt. Nach dieser Verzögerung weist der Signalverlauf SV einen steilen Abfall auf (Bereich 32), um zum Zeitpunkt t₀ ein Minimum min zu durchlaufen und dann wieder langsam anzusteigen (Bereich 34). Dieser Anstieg wird bedingt von einer zunehmenden Beladung des NOₓ-Speicherkatalysators 16 und einer damit verbundenen abnehmenden NOₓ-Speicheraktivität. Wird bereits zum Zeitpunkt t_{S} des Umschaltens der Verbrennungskraftmaschine 10 in den Magermodus M mit einer Integration des Sensorsignals OUT begonnen, um einen gesamten NOₓ-Durchbruch zu ermitteln, entsteht ein relativ großer Fehler aufgrund der dargestellten Verzögerungsphase. Durch das erfindungsgemäße Verfahren sowie die Vorrichtung wird anhand des Signalverlaufs SV des NOₓ-Sensors 18 der Bezugszeitpunkt t₀ bestimmt, um diesen als zeitlichen Nullpunkt für Regelungsprozesse, welche den NOₓ-Speicherkatalysator 16 betreffen, zu verwenden. Praktisch ist dieser Bezugszeitpunkt t₀ mit einem Beginn der NOₓ-Einlagerung in den NOₓ-Speicherkatalysator 16 nach einer Regeneration R gleichzusetzen.

Die Bestimmung des Bezugszeitpunktes t₀ geschieht, indem mit dem Umschalten der Verbrennungskraftmaschine 10 in den mageren Betriebsmodus M oder mit dem Vorliegen eines mageren Abgases an der Position des NOₓ-Sensors 18 mit einer Analyse des Signalverlaufs SV begonnen wird. Dabei erfolgt eine Überprüfung des Signalverlaufs SV auf verschiedene Kriterien, die derart vorgegeben werden, daß in einem sinnvollen Zeitfenster das Auffinden des Bezugszeitpunktes t₀ unter Standardbedingungen sicher erfolgt Der Abfall des Signalverlaufs SV nach dem Umschalten der Verbrennungskraftmaschine 10 (Bereich 32) in den Magermodus M sollte vorteilhafterweise von dem Zeitfenster der Analyse erfaßt werden, um das Minimum sicher ermitteln zu können. Im Rahmen der Signalanalyse wird dann beispielsweise an jedem Meßpunkt eine Steigung des Signalverlaufs bestimmt und mit einer vorausgegangenen Steigung verglichen. Am Beispiel des dargestellten Signalverlaufs SV wird dabei zunächst im Bereich 32 eine stark negative Steigung festgestellt, deren Größe von einem aktuellen Betriebspunkt der Verbrennungskraftmaschine 10 abhängt. Diese Steigung wird zunehmend größer (positiver), um im Minimum min des Signalverlaufs SV Null und danach positiv zu werden. Erfindungsgemäß gilt der Zeitpunkt des Übergangs einer negativen Steigung in eine Steigung von nahe Null als ein hinreichendes Kriterium für die Festlegung des Bezugszeitpunktes t₀. Unmittelbar nach seiner Bestimmung wird der Bezugszeitpunkt t₀ als zeitlicher Nullpunkt für Regelungsprozesse des NOₓ-Speicherkatalysators 16 verwendet, beispielsweise um mit einer Integration des Sensorsignals OUT zu beginnen. Die Analyse des Signalverlaufs SV wird gleichzeitig an diesem Punkt beendet. Die weitere Auswertung des Sensorsignals OUT zur Regelung des NOₓ-Speicherkatalysators 16 kann dabei noch von verschiedenen Betriebsbedingungen der Verbrennungskraftmaschine 10 abhängig gemacht werden.

Da nicht jeder Signalverlauf SV eines NOₓ-Sensors 18 dem in Figur 2 dargestellten entspricht, auf der anderen Seite jedoch nach jeder Regeneration R eines NOₓ-Speicherkatalysators 16 ein Bezugszeitpunkt t₀ zuverlässig detektiert werden sollte, werden vorteilhafterweise weitere Kriterien zur Bestimmung eines Bezugszeitpunktes t₀ vorgegeben, mit denen abweichende Signalverläufe SV berücksichtigt werden können. Beispielsweise kann ein Bezugszeitpunkt t₀ als gefunden gelten, wenn das Signal bereits von Beginn der Analyse des Signalverlaufs SV für eine vorgegebene Mindestzeitspanne einen vorgegebenen Schwellenwert SW dauerhaft unterschreitet.

## Patentansprüche

1. Verfahren zur Regelung eines in einem Abgaskanal einer magerlauffähigen Verbrennungskraftmaschine (10) angeordneten NOₓ-Speicherkatalysators (16) mittels einer stromab des NOₓ-Speicherkatalysators (16) angeordneten NOₓempfindlichen Meßeinrichtung (18), wobei eine Analyse eines nach einem Umschalten der Verbrennungskraftmaschine (10) in einen mageren Betriebsmodus vorliegenden Signalverlaufs (SV) der NOₓ-empfindlichen Meßeinrichtung (18) hinsichtlich mindestens eines vorgegebenen Kriteriums durchgeführt wird; mindestens eines der vorgegebenen Kriterien ein Übergang eines fallenden Signalverlaufes (SV) in eine Steigung nahe Null oder eine positive Steigung des Signalverlaufs (SV) ist und/oder eine Unterschreitung eines vorgegebenen Schwellenwertes des Signals ist; und ein Zeitpunkt, an dem mindestens eines der vorgegebenen Kriterien erfüllt ist, als Bezugszeitpunkt (t₀) für die Regelung von NOₓ-Regenerations- und/oder Entschwefelungsprozessen des NOₓ-Speicherkatalysators (16) festgelegt wird.

2. Verfahren nach Anspruch 1, **dadurch gekennzeichnet, daß** mit dem Umschalten der Verbrennungskraftmaschine (10) in einen mageren Betriebsmodus oder mit einer kurzen Verzögerung mit der Analyse des Signalverlaufs (SV) der Meßeinrichtung (18) zur Bestimmung des Bezugszeitpunktes (t₀) begonnen wird.

3. Verfahren nach Anspruch 1 oder 2, **dadurch gekennzeichnet, daß** eines der vorgegebenen Kriterien eine Steigung nahe Null oder eine positive Steigung des Signalverlaufs (SV) der Meßeinrichtung (18) bei gleichzeitiger Unterschreitung eines vorgegebenen Schwellenwertes des Signals ist.

4. Verfahren nach einem der vorhergehenden Ansprüche, **dadurch gekennzeichnet, daß** eines der vorgegebenen Kriterien ein ständiges Unterschreiten eines vorgegebenen Schwellenwertes für eine vorgegebene Mindestzeitspanne von Beginn der Analyse des Signalverlaufs ist

5. Verfahren nach einem der vorhergehenden Ansprüche, **dadurch gekennzeichnet, daß** eines der vorgegebenen Kriterien ein Unterschreiten eines vorgegebenen Schwellenwertes für eine vorgegebene Mindestdauer ist.

6. Verfahren nach einem der vorhergehenden Ansprüche, **dadurch gekennzeichnet, daß** bei einem Ablauf einer vorgegebenen maximalen Zeitspanne oder eines vorgegebenen Abgasdurchsatzes nach Beginn der Analyse des Signalverlaufes (SV) ohne erfolgreiche Bestimmung des Bezugszeitpunktes (t₀) der Zeitpunkt des Endes der Analyse oder ein anderer vorgegebener Zeitpunkt oder Abgasdurchsatz als Bezugszeitpunkt (t₀) verwendet wird.

7. Verfahren nach einem der vorhergehenden Ansprüche 1 bis 5, **dadurch gekennzeichnet, daß** bei einem Ablauf der vorgegebenen Maximaldauer oder eines vorgegebenen Abgasdurchsatzes nach Beginn der Analyse des Signalverlaufes ohne erfolgreiche Bestimmung des Bezugszeitpunktes (t₀) eine erneute Regeneration des NOₓ-Speicherkatalysators (16) eingeleitet wird.

8. Verfahren nach einem der Ansprüche 6 oder 7, **dadurch gekennzeichnet, daß** nach einem erfolglosen Ablauf der Analyse des Signalverlaufs diese Informationen für weitere Regelungsverfahren der Verbrennungskraftmaschine (10) und/oder des NOₓ-Speicherkatalysators (16) verwendet werden.

9. Verfahren nach einem der vorhergehenden Ansprüche, **dadurch gekennzeichnet, daß** der Signalverlauf (SV) vor seiner Analyse geglättet wird.

10. Verfahren nach einem der vorhergehenden Ansprüche, **dadurch gekennzeichnet, daß** unmittelbar nach Bestimmung des Bezugszeitpunktes (t₀) die Analyse des Signalverlaufs (SV) beendet und eine Auswertung des Signals der Meßeinrichtung (18) zur Regelung des NOₓ-Speicherkatalysators (16) freigegeben wird.

11. Verfahren nach einem der vorhergehenden Ansprüche, **dadurch gekennzeichnet, daß** der Bezugszeitpunkt (t₀) als zeitlicher Nullpunkt für einen Beginn einer NOₓ-Einlagerung des NOₓSpeicherkatalysators (16) für die Regelung der NOₓ-Regeneration und/oder der Entschwefelung des NOₓ-Speicherkatalysators (16) verwendet wird.

12. Verfahren nach einem der vorhergehenden Anspruche, **dadurch gekennzeichnet, daß** mit dem Bezugszeitpunkt (t₀) eine Integration einer durch den NOₓ-Speicherkatalysator (16) durchgesetzten NOₓ-Masse und/oder eine Berechnung einer in den NOₓ-Speicherkatalysator (16) eingelagerten NOₓ-Masse beginnt.

13. Verfahren nach einem der vorhergehenden Ansprüche, **dadurch gekennzeichnet, daß** der Signalwert am Bezugszeitpunkt (t₀) als ein Offset für eine Kalibrierung der Meßeinrichtung (18) verwendet wird.

14. Verfahren nach einem der vorhergehenden Ansprüche, **dadurch gekennzeichnet, daß** die Bestimmung des Bezugszeitpunktes (t₀) nach jeder NOₓ-Regeneration und Entschwefelung durchgeführt wird.

15. Verfahren nach einem der vorhergehenden Ansprüche, **dadurch gekennzeichnet, daß** der Bezugszeitpunkt (t₀) bis zu einem erneuten Umschalten der Verbrennungskraftmaschine (10) in einen mageren Betriebsmodus oder bis zu einem Vorliegen mageren Abgases an der Position der Meßeinrichtung (18) gültig ist.

16. Verfahren nach einem der Ansprüche 1 bis 15, **dadurch gekennzeichnet, daß** der Bezugszeitpunkt (t₀) bis zu einem Umschalten der Verbrennungskraftmaschine (10) in einen stöchiometrischen oder fetten Betriebsmodus oder bis zu einem Vorliegen stöchiometrischen oder fetten Abgases an der Position der Meßeinrichtung (18) gültig ist.

17. Vorrichtung zur Bestimmung einer NOₓ-Konzentration eines Abgasstromes einer Verbrennungskraftmaschine (10) mittels einer stromab eines NOₓ-Speicherkatalysators (16) in einem Abgasstrang der Verbrennungskraftmaschine (10) angeordneten NOₓ-empfindlichen Meßeinnchtung (18) mit Mitteln, mit weichen die Verfahrensschritte Durchführung einer Analyse eines nach einem Umschalten der Verbrennungskraftmaschine (10) in einen mageren Betnebsmodus vorliegenden Signalverlaufs (SV) der NOₓ-empfindlichen Meßeinrichtung (18) hinsichtlich mindestens eines vorgegebenen Kriteriums, wobei mindestens eines der vorgegebenen Kriterien ein Übergang eines fallenden Signalverlaufes (SV) in eine Steigung nahe Null oder eine positive Steigung des Signalverlaufs (SV) ist und/oder eine Unterschreitung eines vorgegebenen Schwellenwertes des Signals ist, und Festlegung eines Zeitpunktes, an dem mindestens eines der vorgegebenen Kriterien erfüllt ist, als Bezugszeitpunkt (t₀) für die Regelung von NOₓ-Regenerations- und/oder Entschwefelungsprozessen des NOₓ-Speicherkatalysators (16) ausführbar sind.

18. Vorrichtung nach Anspruch 17, **dadurch gekennzeichnet, daß** die Mittel eine Steuereinheit (22) umfassen, in der eine Prozedur zur Steuerung der Verfahrensschritte zur Regelung eines NOₓ-Speicherkatalysators (16) in digitaler Form hinterlegt ist.

19. Vorrichtung nach Anspruch 18, **dadurch gekennzeichnet, daß** die Steuereinheit (22) in ein Motorsteuergerät (20) integriert ist.

## Claims

1. Method for regulating an NOₓ storage catalyst (16) disposed in an exhaust duct of a lean-running combustion engine (10) by means of an NOₓ-sensitive measuring device (18) disposed downstream of the NOₓ storage catalyst (16), wherein an analysis of a signal characteristic (SV) of the NOₓ-sensitive measuring device (18) present after a switching of the combustion engine (10) into a lean-operating mode is performed with reference to at least one predetermined criterion; wherein at least one of the predetermined criteria is a transition of a falling signal characteristic (SV) into a gradient close to zero or into a positive gradient of the signal characteristic (SV), and/or a falling below a predetermined threshold value of the signal; and wherein a point in time, at which at least one of the predetermined criteria is fulfilled, is determined as a reference time (t₀) for regulating NOₓ regeneration processes and/or desulfuration processes of the NOₓ storage catalyst (16).

2. Method according to claim 1, **characterised in that** the analysis of the signal characteristic (SV) of the measuring device (18) for determining the reference time (t₀) is started at the time of switching the combustion engine (10) into a lean-operating mode or with a short delay.

3. Method according to claim the 1 or 2, **characterised in that** one of the predetermined criteria is a gradient close to zero or a positive gradient of the signal characteristic (SV) of the measuring device (18) at the same time as falling below a predetermined threshold value of the signal.

4. Method according to any one of the preceding claims, **characterised in that** one of the predetermined criteria is a constant falling below a predetermined threshold value for a predetermined minimum period of time from the start of the analysis of the signal characteristic.

5. Method according to any one of the preceding claims, **characterised in that** one of the predetermined criteria is a falling below a predetermined threshold value for a predetermined minimum duration.

6. Method according to any one of the preceding claims, **characterised in that**, in the event of a completion of a predetermined maximum period of time or a predetermined exhaust-gas throughput after the start of the analysis of the signal characteristic (SV) without a successful determination of the reference time (t₀), the end of the analysis or another predetermined point in time or exhaust-gas throughput is used as the reference time (t₀).

7. Method according to any one of the preceding claims 1 to 5, **characterised in that**, in the event of a completion of the predetermined maximum duration or a predetermined exhaust-gas throughput after the start of the analysis of the signal characteristic without a successful determination of the reference time (t₀), a new regeneration of the NOₓ storage catalyst (16) is started.

8. Method according to any one of the preceding claims 6 or 7, **characterised in that**, after an unsuccessful completion of the analysis of the signal characteristic, the information registered is used for future regulation processes of the combustion engine (10) and/or of the NOₓ storage catalyst (16).

9. Method according to any one of the preceding claims, **characterised in that** the signal characteristic (SV) is smoothed before it is analysed.

10. Method according to any one of the preceding claims, **characterised in that**, immediately after determining the reference time (t₀), the analysis of the signal characteristic (SV) is terminated and an evaluation of the signal from the measuring device (18) is released for the regulation of the NOₓ storage catalyst (16).

11. Method according to any one of the preceding claims, **characterised in that** the reference time (t₀) is used as a zero point in time for a start of an NOₓ deposition of the NOₓ storage catalyst (16), for the regulation of the NOₓ regeneration and/or the desulfuration of the NOₓ storage catalyst (16).

12. Method according to any one of the preceding claims, **characterised in that** an integration of an NOₓ mass passed through the NOₓ storage catalyst (16) and/or a calculation of an NOₓ mass deposited in the NOₓ storage catalyst (16) is started at the reference time (t₀).

13. Method according to any one of the preceding claims, **characterised in that** the signal value at the reference time (t₀) is used as an offset for a calibration of the measuring device (18).

14. Method according to any one of the preceding claims, **characterised in that** the reference time (t₀) is determined after every NOₓ regeneration and desulfuration.

15. Method according to any one of the preceding claims, **characterised in that** the reference time (t₀) is valid until a new switching of the combustion engine (10) into a lean-operating mode or until a presence of lean exhaust gas at the position of the measuring device (18).

16. Method according to any one of claims 1 to 15, **characterised in that** the reference time (t₀) is valid until a switching of the combustion engine (10) into a stoichiometric or rich-operating mode or until a presence of stoichiometric or rich exhaust gas at the position of the measuring device (18).

17. Device for the determination of an NOₓ concentration of an exhaust-gas flow of a combustion engine (10) by means of an NOₓ-sensitive measuring device (18) disposed downstream of an NOₓ storage catalyst (16) in an exhaust gas duct of the combustion engine (10) comprising means, with which the procedural stages of implementing an analysis of a signal characteristic (SV) of the NOₓ-sensitive measuring device (18) present after a switching of the combustion engine (10) into a lean-operating mode with reference to at least one predetermined criterion, wherein at least one of the predetermined criteria is a transition of a falling signal characteristic (SV) into a gradient close to zero or a positive gradient of the signal characteristic (SV) and/or a falling below a predetermined threshold value of the signal; and determining a point in time, at which at least one of the predetermined criteria is fulfilled, can be executed as the reference time (t₀) for the regulation of NOₓ regeneration processes and/or desulfuration processes of the NOₓ storage catalyst (16).

18. Device according to claim 17, **characterised in that** the means comprise a control unit (22), in which a procedure for controlling the procedural stages for the regulation of an NOₓ storage catalyst (16) is stored in digital form.

19. Device according to claim 18, **characterised in that** the control unit (22) is integrated in an engine control device (20).

## Revendications

1. Procédé destiné au réglage d'un catalyseur à accumulation de NOₓ (16), disposé dans un tuyau de gaz d'échappement d'un moteur à combustion interne (10) pouvant fonctionner en régime pauvre, au moyen d'un dispositif de mesure (18) sensible aux NOₓ disposé en aval du catalyseur à accumulation de NOₓ (16), une analyse d'une évolution de signal (SV) du dispositif de mesure (18) sensible aux NOₓ existant après une commutation du moteur à combustion interne (10) sur un mode de fonctionnement en régime pauvre étant effectuée en ce qui concerne au moins un critère prédéterminé, au moins l'un des critères prédéterminés étant une transition entre une évolution de signal (SV) décroissante et une pente proche de zéro ou une pente positive de l'évolution de signal (SV), et/ou étant une chute au-dessous d'une valeur de seuil prédéterminée du signal, et un moment auquel il est satisfait à au moins un des critères prédéterminés étant déterminé en tant que moment de référence (t₀) pour le réglage de processus de régénération de NOₓ et/ou de désulfuration du catalyseur à accumulation de NOₓ (16).

2. Procédé selon la revendication 1, **caractérisé en ce que** l'analyse de l'évolution de signal (SV) du dispositif de mesure (18) destiné à la détermination du moment de référence (t₀) commence avec la commutation du moteur à combustion interne (10) sur un mode de fonctionnement en régime pauvre ou avec un bref retard.

3. Procédé selon la revendication 1 ou 2, **caractérisé en ce que** l'un des critères prédéterminés est une pente proche de zéro ou une pente positive de l'évolution de signal (SV) du dispositif de mesure (18) associée simultanément à la non-atteinte d'une valeur de seuil prédéterminée du signal.

4. Procédé selon l'une des revendications précédentes, **caractérisé en ce que** l'un des critères prédéterminés est une non-atteinte permanente d'une valeur de seuil prédéterminée pour un intervalle de temps minimal prédéterminé à partir du début de l'analyse de l'évolution de signal.

5. Procédé selon l'une des revendications précédentes, **caractérisé en ce que** l'un des critères prédéterminés est une non-atteinte d'une valeur de seuil prédéterminée pour une durée minimale prédéterminée.

6. Procédé selon l'une des revendications précédentes, **caractérisé en ce que,** sans détermination réussie du moment de référence (t₀) à l'issue d'un intervalle de temps maximal prédéterminé ou d'un débit prédéterminé de gaz d'échappement après le début de l'analyse de l'évolution de signal (SV), le moment de la fin de l'analyse ou un autre moment prédéterminé ou le débit de gaz d'échappement est utilisé en tant que moment de référence (t₀).

7. Procédé selon l'une des revendications 1 à 5, **caractérisé en ce que,** sans détermination réussie du moment de référence (t₀) à l'issue de la durée maximale prédéterminée ou d'un débit prédéterminé de gaz d'échappement après le début de l'analyse de l'évolution de signal, une nouvelle régénération du catalyseur à accumulation de NOₓ (16) est initiée.

8. Procédé selon l'une des revendications 6 ou 7, **caractérisé en ce que,** après un déroulement non réussi de l'analyse de l'évolution de signal, ces informations sont utilisées pour d'autres procédés de réglage du moteur à combustion interne (10) et/ou du catalyseur à accumulation de NOₓ (16).

9. Procédé selon l'une des revendications précédentes, **caractérisé en ce que** l'évolution de signal (SV) est lissée avant son analyse.

10. Procédé selon l'une des revendications précédentes, **caractérisé en ce que** l'analyse de l'évolution de signal (SV) est terminée immédiatement après la détermination du moment de référence (t₀), et **en ce qu'**une évaluation du signal du dispositif de mesure (18) est débloquée pour le réglage du catalyseur à accumulation de NOₓ (16).

11. Procédé selon l'une des revendications précédentes, **caractérisé en ce que** le moment de référence (t₀) est utilisé en tant que point zéro dans le temps pour un début d'une accumulation de NOₓ du catalyseur à accumulation de NOₓ (16) pour le réglage de la régénération de NOₓ et/ou de la désulfuration du catalyseur à accumulation de NOₓ (16).

12. Procédé selon l'une des revendications précédentes, **caractérisé en ce qu'**une intégration d'une masse de NOₓ débitée à travers le catalyseur à accumulation de NOₓ (16) et/ou un calcul d'une masse de NOₓ accumulée dans le catalyseur à accumulation de NOₓ (16) commence avec le moment de référence (t₀).

13. Procédé selon l'une des revendications précédentes, **caractérisé en ce que** la valeur du signal au niveau du moment de référence (t₀) est utilisée en tant qu'offset pour un étalonnage du dispositif de mesure (18).

14. Procédé selon l'une des revendications précédentes, **caractérisé en ce que** la détermination du moment de référence (t₀) est effectuée après chaque régénération de NOₓ et désulfuration.

15. Procédé selon l'une des revendications précédentes, **caractérisé en ce que** le moment de référence (t₀) est valable jusqu'à une nouvelle commutation du moteur à combustion interne (10) sur un mode de fonctionnement en régime pauvre ou jusqu'à la présence de gaz d'échappement pauvres au niveau de la position du dispositif de mesure (18).

16. Procédé selon l'une des revendications 1 à 15, **caractérisé en ce que** le moment de référence (t₀) est valable jusqu'à une commutation du moteur à combustion interne (10) sur un mode de fonctionnement stoechiométrique ou en régime riche ou jusqu'à la présence de gaz d'échappement stoechiométriques ou riches au niveau de la position du dispositif de mesure (18).

17. Dispositif destiné à la détermination d'une concentration en NOₓ d'un flux de gaz d'échappement d'un moteur à combustion interne (10) au moyen d'un dispositif de mesure (18) sensible aux NOₓ placé en aval d'un catalyseur à accumulation de NOₓ (16) disposé dans un tuyau de gaz d'échappement du moteur à combustion interne (10), comportant des moyens avec lesquels peuvent être mises en oeuvre les phases de procédé que sont, l'exécution d'une analyse d'une évolution de signal (SV) du dispositif de mesure (18) sensible aux NOₓ existant après une commutation du moteur à combustion interne (10) sur un mode de fonctionnement en régime pauvre en ce qui concerne au moins un critère prédéterminé, au moins l'un des critères prédéterminés étant une transition entre une évolution de signal (SV) décroissante et une pente proche de zéro ou une pente positive de l'évolution de signal (SV), et/ou étant une chute au-dessous d'une valeur de seuil prédéterminée du signal, et la détermination d'un moment auquel il est satisfait à au moins l'un des critères prédéterminés en tant que moment de référence (t₀) pour le réglage de processus de régénération de NOₓ et/ou de désulfuration du catalyseur à accumulation de NOₓ (16).

18. Dispositif selon la revendication 17, **caractérisé en ce que** les moyens comprennent une unité de commande (22), dans laquelle une procédure de commande des phases de procédé destinées au réglage d'un catalyseur à accumulation de NOₓ (16) est mémorisée sous une forme numérique.

19. Dispositif selon la revendication 18, **caractérisé en ce que** l'unité de commande (22) est intégrée dans un appareil de commande (20) de moteur.
